# EUROPEAN PATENT SPECIFICATION

(11) **EP 2 223 623 B1**
(45) Date of publication and mention of the grant of the patent: **12.12.2012**
(21) Application number: 08868200.0
(22) Date of filing: 16.12.2008
(51) Int. Cl.: A44B 11/25, B60R 22/48

(54) **SEATBELT BUCKLE WITH SWITCH**
SITZGURTSCHNALLE MIT SCHALTER
BOUCLE DE CEINTURE DE SÉCURITÉ AVEC INTERRUPTEUR

(30) Priority: 28.12.2007 JP 2007340036
(43) Date of publication of application: 01.09.2010
(73) Proprietor: Autoliv Development AB, 447 83 Vårgårda (SE)
(72) Inventor: AOYAGI, Mitsunori, Yokohama-shi Kanagawa 222-0033 (JP); NAKAJIMA, Susumu, Yokohama-shi Kanagawa 222-0033 (JP)
(74) Representative: Müller Verweyen
(86) International application number: PCT/JP2008/072892
(87) International publication number: WO 2009/084429

(56) References cited:
- EP-A1- 1 078 828
- EP-A2- 1 424 250
- WO-A1-2007/032168
- JP-A- 2001 224 408
- JP-A- 2004 049 358
- JP-T- 2006 515 245
- JP-U- 2 026 961
- US-A1- 2004 227 638
- US-B1- 6 329 893

## Description

### TECHNICAL FIELD

The present invention relates to a seatbelt buckle with a switch that is capable of monitoring attachment/detachment of a tongue plate provided on a seatbelt to a buckle main body.

### BACKGROUND ART

A seatbelt device is attached to a seat of an automobile or another mode of transportation to protect an occupant during an emergency such as a collision. A buckle device is normally provided to facilitate attachment and detachment of this type of seatbelt device. In a typical buckle device, a latch member for latching a tongue plate is biased by a spring in a latching direction toward the tongue plate, and the latch member is held in a latched state, in which the tongue plate is latched to a buckle main body, by a lock member.

In this type of buckle device, measures must be taken to ensure that a lamp can be used to indicate that the tongue plate and the buckle main body are in the latched state, a belt retracting force reduction mechanism such as a retractor or the like can be operationally controlled, or seatbelt attachment/detachment information can be transmitted to an airbag ECU (electronic control unit). For this purpose, a buckle switch for detecting the latched state is provided in the interior of the buckle main body (see Patent Documents 1 and 2, for example).

In a buckle device described in Patent Document 1, a magnetic plate that moves when pushed by a tongue plate is provided in the interior of a case such that when the magnetic plate approaches or moves away from a magnet, the orientation of a magnetic field traversing a magnetic resistance sensor is varied. By having the magnetic resistance sensor detect this variation in the orientation of the magnetic field, it can be determined whether or not the tongue plate has been locked by a latch. Effects from an external magnetic field are suppressed by providing a magnetic shield constituted by a magnetic body such as iron over substantially an entire inner surface of the case.

Further, in a buckle device described in Patent Document 2, in an unlatched state, a magnet provided on an ejector separates from a Hall element and switches OFF, whereas in a latched state, the magnet moves directly under the Hall element and switches ON. The Hall element is surrounded by a frame having a magnetic shielding property and is therefore shielded from the magnetism of an external magnetic field. As a result, effects from an external magnetic field on the Hall element are suppressed.
Patent Document 3 discloses a seatbelt buckle according to the preamble of claim 1
Patent Document 1: Japanese Patent Application Publication No. 2001-224408
Patent Document 2: Japanese Patent Application Publication No. 2004-049358
Patent Document 3: US6,329,893 B1

Incidentally, in the buckle device described in Patent Document 1, the magnetic shield is provided over substantially the entire inner surface of the case, leading to increases in the overall size and weight of the buckle device, including the case.

Further, in the buckle device described in Patent Document 2, effects from the external magnetic field are suppressed by surrounding the Hall element with the frame, leading to increases in the size and weight of the frame. Moreover, the Hall element is disposed close to a side wall of the frame, and therefore the effects of the external magnetic field are not suppressed sufficiently.

### DISCLOSURE OF THE INVENTION

The present invention has been designed in consideration of these problems, and an object thereof is to provide a seatbelt buckle with a switch that can be reduced in size and weight and that can suppress the effects of an external magnetic field reliably.

The object of the present invention is achieved by the following constitutions.
(1) A seatbelt buckle with a switch, including a tongue plate provided on a seatbelt, a buckle main body to which the tongue plate is detachably attached, and a switch capable of monitoring attachment/detachment of the tongue plate to/from the buckle main body,
   wherein the buckle main body includes: a frame; an ejector that is provided on the frame to be capable of sliding in an insertion/removal direction of the tongue plate and that pushes the tongue plate out of the buckle main body when a latch between the tongue plate and the buckle main body is released; and a latch member capable of rotating so as to latch the tongue plate when the tongue plate is inserted into the buckle main body,
   the switch is attached to an outer side of a side wall of the frame, and
   the switch includes: a magnetic detection portion capable of outputting a signal corresponding to a magnetic flux density; a magnet that applies a magnetic field to the magnetic detection portion; and a switch plate that is attached to the ejector so as to move in conjunction therewith and that varies a magnetic flux density received by the magnetic detection portion from the magnet in accordance with a position of the ejector,
   a magnetic disturbance protecting plate being further provided to cover at least the switch plate in a state where the tongue plate is attached to the buckle main body.
(2) The seatbelt buckle with a switch described in (1), wherein the magnetic disturbance protecting plate is attached to a case housing the buckle main body so as to cover the switch.
(3) The seatbelt buckle with a switch described in (1) or (2), wherein a tongue plate side end portion of the magnetic disturbance protecting plate in the insertion/removal direction is positioned further toward a non-tongue plate side than a part joining the ejector to the switch plate when said latch is released.

With the seatbelt buckle with a switch according to the present invention, the switch including the magnetic detection portion, the magnet, and the switch plate is attached to the outer side of the side wall of the frame such that at least the switch plate is magnetically shielded by the magnetic disturbance protecting plate when the tongue plate is attached to the buckle main body. As a result, the frame can be reduced in size and weight, and effects from an external magnetic field can be suppressed reliably.

### BRIEF DESCRIPTION OF THE DRAWINGS

Fig. 1 is an exploded perspective view showing an embodiment of a seatbelt buckle with a switch;

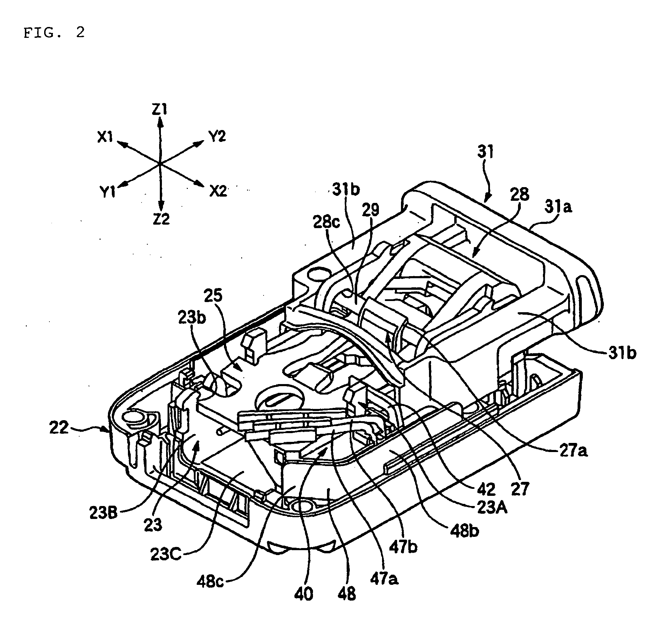

Fig. 2 is a perspective view showing the interior of a lower cover from above in a state where a biasing member is not attached;
Fig. 3A is a plan view showing the interior of the lower cover in an unlatched state, and Fig. 3B is a side view showing a frame and a switch;
Fig. 4A is a plan view showing the interior of the lower cover in a latched state, and Fig. 4B is a side view showing the frame and the switch;
Fig. 5 is a perspective view showing the frame to which the switch is attached from above;
Fig. 6 is a perspective view showing the frame from above a seatbelt side; and
Fig. 7 is a view illustrating the seatbelt buckle according to the present invention under a magnet approach resistance test.

### DESCRIPTION OF REFERENCE NUMERALS

- 10: seatbelt buckle with a switch
- 11: seatbelt
- 12: tongue plate
- 20: buckle main body
- 22: lower case (case)
- 23: frame
- 23A: side wall
- 24: ejector
- 25: latch member
- 26: switch plate
- 40: switch
- 45: magnet
- 46: Hall element (magnetic detection portion)
- 48: magnetic disturbance protecting plate

### BEST MODE FOR CARRYING OUT THE INVENTION

A seatbelt buckle with a switch according to an embodiment of the present invention will be described in detail below on the basis of the drawings.

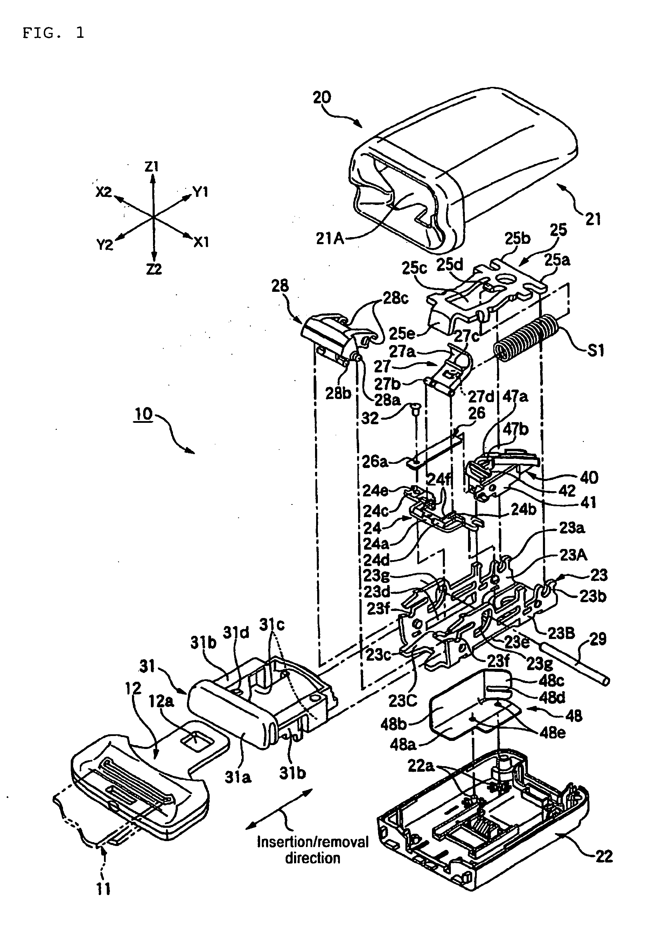

As shown in Fig. 1, a seatbelt buckle with a switch 10 according to this embodiment includes a tongue plate 12 provided on a seatbelt 11, a buckle main body 20 to which the tongue plate 12 is detachably attached, and a switch 40 capable of monitoring attachment/detachment of the tongue plate 11 to/from the buckle main body 20.

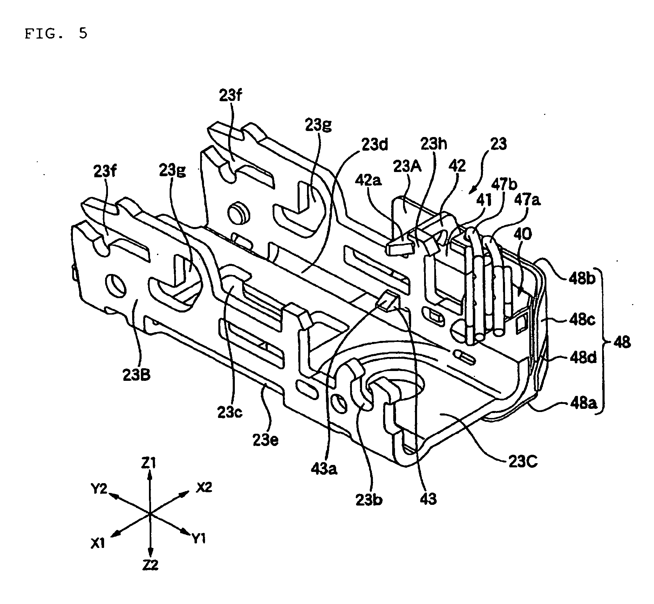

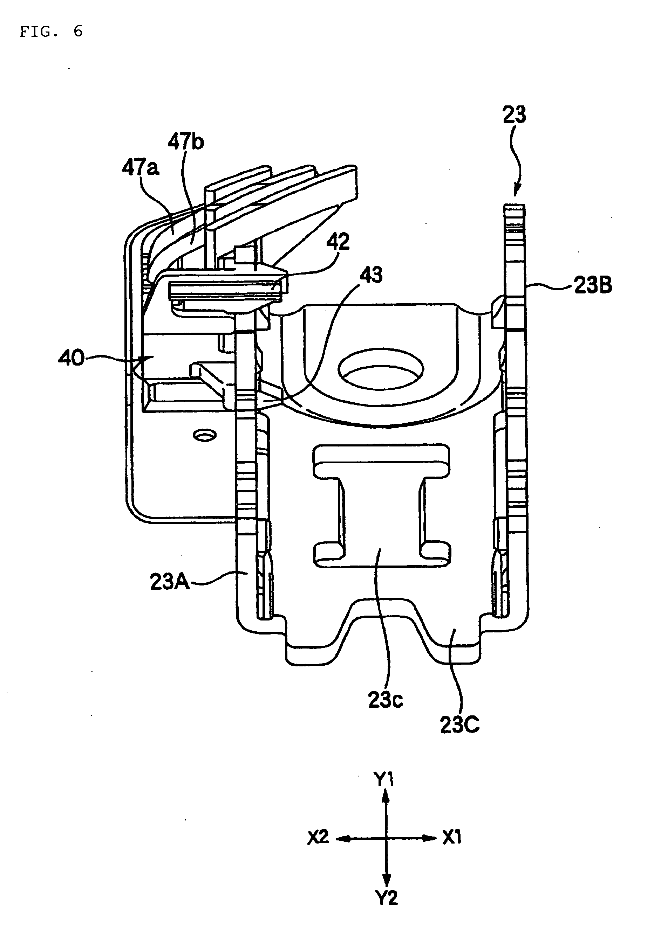

An exterior of the buckle main body 20 is mainly constituted by an upper cover 21 and a lower cover 22. A frame 23 that includes a pair of side walls 23A, 23B and a bottom portion 23C provided between the pair of side walls 23A, 23B so as to have a U-shaped cross-section is provided in the interior of the buckle main body 20 (see Figs. 5 and 6). The frame 23 is constituted by a metal plate made of a magnetic material such as S55C, for example.

A latch member 25 constituted by a metal plate made of S45C, S50C, or the like is provided in the interior of the frame 23. One end (a Y1 side end portion in the drawing) of the latch member 25 includes support arms 25a, 25b that project respectively in X1 and X2 directions of the drawing so as to be supported rockably in support holes 23a, 23b provided in the side walls 23A, 23B of the frame 23. Further, an opening portion 25c is formed in the center of the latch member 25, and a latch projecting portion 25d projecting in a Y2 direction of the drawing is formed on an edge portion of the opening portion 25c. Another tip end (a Y2 side end portion in the drawing) of the latch member 25 is provided with a latch portion 25e that projects in a protruding form in a Z2 direction of the drawing to be capable of advancing into and retreating from a latch hole 23c (see Figs. 5 and 6) formed in the bottom portion 23C of the frame 23.

An ejector 24 made of a resin such as polyacetal is provided between the latch member 25 and the bottom portion 23C of the frame 23. The ejector 24 includes a base portion 24a formed in a U shape and arm portions 24b, 24c extending in respective side directions (the X1 and X2 directions) from either tip end portion of the base portion 24a. Further, a pushed portion 24d is formed on a Y2 side surface, in the drawing, of the base portion 24a.

The arm portions 24b, 24c are inserted respectively into elongated holes 23d, 23e (see Fig. 5) formed between the respective side walls 23A, 23B and the bottom portion 23C of the frame 23 such that respective tip ends thereof extend to the exterior of the frame 23. By moving the arm portions 24b, 24c within the elongated holes 23d, 23e, the ejector 24 can be caused to slide along the frame 23 in an insertion/removal direction of the tongue plate 12.

Further, a rivet hole 24e is provided in the tip end portion of the arm portion 24c that projects to the exterior of the frame 23, and a switch plate 26 serving as a constitutional component of the switch 40 is attached to the ejector 24 by joining the rivet hole 24e to a rivet hole 26a formed in the switch plate 26 using a rivet 32. The switch plate 26 is a thin plate-shaped elongated member constituted by a metal plate made of SPCC or the like.

Holding holes 24f, 24f are provided in the U-shaped base portion 24a of the ejector 24, and a cantilever 27 is supported rotatably in the holding holes 24f, 24f. The cantilever 27 includes a latch portion 27a formed on a tip end thereof by a curved surface, a shaft portion 27b that is held in the holding holes 24f, 24f of the ejector 24, a latch projecting portion 27c provided in a plane of the latch portion 27a, and a spring holding projecting portion 27d formed on a front surface (an opposite surface to the paper surface in Fig. 1) of the cantilever 27.

A biasing member S1 constituted by a coil spring or the like is provided in a compressed state between the spring holding projecting portion 27d and the latch projecting portion 25d of the latch member 25 to exert a biasing force between the spring holding projecting portion 27d and the latch projecting portion 25d in a direction for separating the two components from each other. The biasing member S1 biases the latch portion 27a side forming the tip end of the cantilever 27 in a counter-clockwise direction of Fig. 1 at all times.

As shown in Figs. 1 and 5, notch portions 23f, 23f constituted by elongated grooves extending in the Y direction of the drawing and recessed grooves dipping in a Z1 direction of the drawing are formed on the Y2 side, in the drawing, of the respective side walls 23A, 23B of the frame 23. A rotary shaft 28a of a stopper 28 is inserted and supported rockably in the recessed grooves of the notch portions 23f, 23f. An operating shaft 28b extending in the X1 and X2 directions of the drawing is formed on a Z2 direction lower end of the stopper 28 in the drawing, and latch portions 28c, 28c are formed integrally with a Y1 direction tip end of the stopper 28. Note that the latch portions 28c, 28c are disposed within a movement locus of a lock bar 29 to be described below.

Further, guidance holes 23g, 23g drilled in a substantially L-shaped form are provided symmetrically in the respective side walls 23A, 23B of the frame 23, and the lock bar 29 is inserted into the guidance holes 23g, 23g. The lock bar 29 is capable of moving within the guidance holes 23g, 23g together with the cantilever 27. Further, the lock bar 29 is latched to the latch portion 27a of the cantilever 27 and held by the latch portions 28c, 28c of the stopper 28.

As shown in Fig. 1, a release button 31 that moves freely in the attachment/detachment direction (the Y direction) is provided on the Y2 side of the frame 23. The release button 31 includes an operation portion 31a that is exposed to the outside via an opening 21A provided on the Y2 side of the upper cover 21, and leg portions 31b, 31b extending from the operation portion 31a in the Y1 direction of the drawing. Operation recess portions 31c, 31c are formed in tip end portions of the respective leg portions 31b, 31b, and the two ends of the lock bar 29, which extend to the outside from the guidance holes 23g, 23g in the frame 23, are inserted into the operation recess portions 31c, 31c.

Guidance projecting portions 31d, 31d projecting in an inside direction and extending in the Y direction of the drawing are formed on respective inner surfaces of the leg portions 31b, 31b. The guidance projecting portions 31d, 31d are inserted into the elongated grooves of the respective notches 23f, 23f (see Fig. 5) formed in the frame 23. When the release button 31 moves in the Y1 and Y2 directions, the guidance projecting portions 31d, 31d are guided by the elongated grooves of the notches 23f, 23f. Thus, the release button 31 is capable of moving parallel to the bottom portion 23C of the frame 23.

Hence, when the operation portion 31a of the release button 31 is pressed in the Y1 direction of the drawing, pressure is applied to the operation shaft 28b of the stopper 28 in the Y1 direction of the drawing such that the stopper 28 is rotated in the counter-clockwise direction of Fig. 1. Similarly, when the release button 31 is moved in the Y2 direction of the drawing, the stopper 28 is rotated in a clockwise direction of Fig. 1.

The switch 40 for monitoring attachment/detachment of the tongue plate 12 provided on the seatbelt 11 to/from the buckle main body 20 is attached to an outer side of the side wall 23A of the frame 23. The switch 40 includes a switch main body 41, and a pair of latch arms 42, 43 provided to project from the switch main body 41 and having hook-shaped latch portions 42a, 43a on respective tip ends thereof (see Fig. 5). The switch 40 is attached to the outer side of the side wall 23A of the frame 23 by latching the latch portions 42, 43 to a switch attachment portion 23h and an elongated hole 23d provided respectively in an upper end portion and a lower end portion of the side wall 23A of the frame 23.

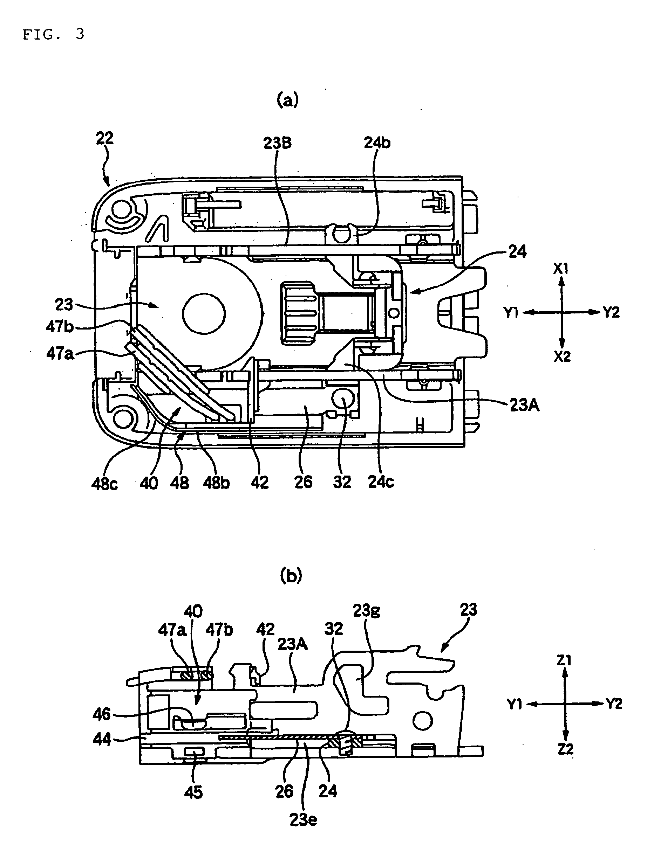

As shown in Fig. 3B, a slit 44 having a predetermined height is provided in a lower portion of the switch main body 40 in the insertion/removal direction of the tongue plate 12. A Hall element 46 serving as a magnetic detection portion capable of outputting a signal corresponding to a magnetic flux density is provided above the slit 44, and a magnet 45 for applying a magnetic field to the Hall element 46 is provided below the slit 44. The Hall element 46 is connected to an ECU (not shown) by wires 47a, 47b via a printed board (not shown) or the like provided on the switch main body 41 and installed with an operational amplifier (voltage amplifier) and a comparator. Further, the switch plate 26 attached to the ejector 24 is housed in the slit 44 to be capable of advancing and retreating.

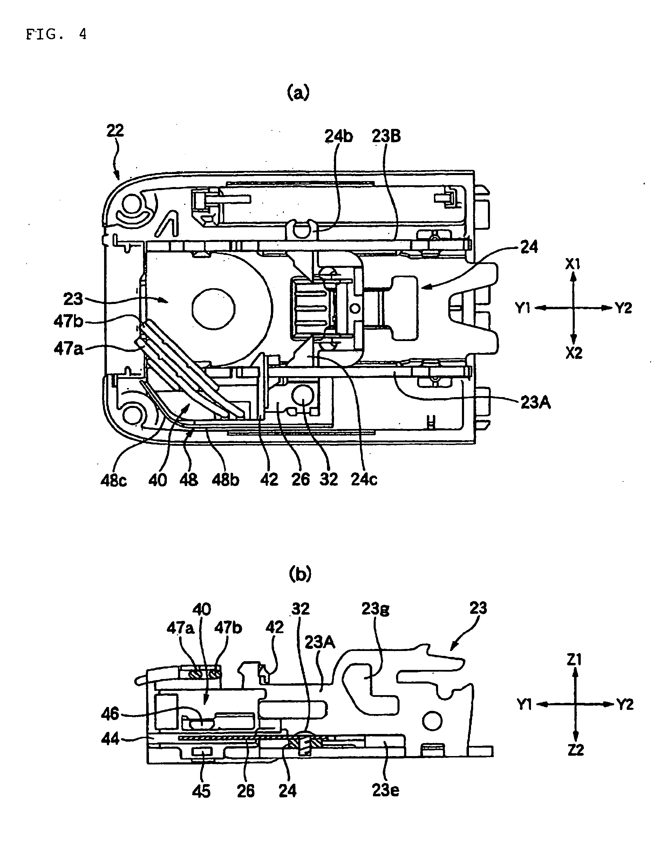

Hence, in a latched state where the tongue plate 12 is inserted and locked, as shown in Fig. 3, the switch plate 26 is positioned between the magnet 45 and the Hall element 46 such that the magnetic field applied to the Hall element 46 by the magnet 45 is blocked, and therefore the Hall element 46 determines that the tongue plate 12 is latched from variation in the magnetic flux density.
On the other hand, during an unlatching operation in which the lock is released and the tongue plate 12 is withdrawn, as shown in Fig. 4, the switch plate 26 moves together with the ejector 24 so as to recede from the magnet 45 and the Hall element 46. Accordingly, the Hall element 46 determines that the tongue plate 12 has been detached by detecting variation in the magnetic flux density applied thereto by the magnet 45.

Further, as shown in Figs. 1, 3A and 4A, a magnetic disturbance protecting plate 48 is provided on an inner surface of the lower cover 22 in a position opposing the switch 40. The magnetic disturbance protecting plate 48 includes a bottom plate 48a and an upright wall 48b and is formed with a substantially L-shaped cross-section. A plurality of attachment holes 48e are provided in the bottom plate 48a, and a plurality of attachment projections 22a provided on the inner surface of the lower cover 22 are passed through the attachment holes 48e and fixed by heat-fastening or the like. Note that the magnetic disturbance protecting plate 48 is preferably constituted by a member having a magnetism shielding property, such as a plated member, like non-oriented magnetic steel 50A470 (JIS 2552) or a steel sheet like SPCC, SECC, and so on.

A front end portion 48c bent inwardly (toward the frame 23 side) is formed on an end portion (a right side end portion in Fig. 1) of the upright wall 48b in the insertion direction of the tongue plate 12 to extend substantially to a front end surface of the upright wall 23A of the frame 23. Further, a slit 48d through which the switch plate 26 can pass when moving in conjunction with the ejector 24 is formed in the front end portion 48c.

Hence, when the frame 23 provided with the switch 40 is attached to the interior of the lower cover 22, the magnetic disturbance protecting plate 48 attached to the inner surface of the lower cover 22 covers the outer side of the switch 40 (see Fig. 5). As a result, the switch 40 is sandwiched on its left and right sides by the side wall 23A of the frame 23 and the magnetic disturbance protecting plate 48, and the bottom portion of the switch 40 is also covered by the magnetic disturbance protecting plate 48.

Furthermore, although the switch plate 26 advances and retreats within the slit 44, the length of the bottom plate 48a and upright wall 48b of the magnetic disturbance protecting plate 48 is sufficient to cover the switch plate 26 at least in the latched state. Note that in the unlatched state, the magnetic disturbance protecting plate 48 covers the part of the switch plate 26 that shields the Hall element 46 from the magnet 45 in the latched state. Hence, the part of the switch plate 26 that shields the Hall element 46 from the magnet 45 is covered by the magnetic disturbance protecting plate 48 at all times, and it is therefore possible to prevent the switch plate 26 from being magnetized by an outside disturbance.

Meanwhile, to suppress a large increase in weight generated by the magnetic disturbance protecting plate 48, the magnetic disturbance protecting plate 48 is preferably set such that a width direction non-upright wall side end portion (an X1 side end portion) of the bottom portion 48a is positioned further toward the upright wall side than a width direction intermediate portion of the frame 23 and such that tongue plate side end portions (Y2 side end portions) of the bottom portion 48a and the upright wall 48b in the insertion/removal direction are positioned further toward a non-tongue plate side (the Y1 side) than the position of the rivet 32 serving as the part that joins the switch plate 26 in the unlatched state to the ejector 24.

Next, an operation of the switch 40 performed during a latching operation will be described.

### (1) Initial state (unlatched state)

In an initial state where the tongue plate 12 is not attached to the buckle main body 20, the release button 31 in the buckle main body 20 is moved, albeit slightly, in the Y1 direction of Fig. 1 while the ejector 24 is moved in the Y2 direction of Fig. 1 by a biasing force of the biasing member S1. Further, the cantilever 27 is rotated about the shaft portion 27b in the clockwise direction of Fig. 1 while the stopper 28 is rotated in the counter-clockwise direction of Fig. 1 in accordance with the Y2 direction position of the release button 31. At this time, the lock bar 29 is moved to a vertical direction upper end portion of the guidance holes 23g, 23g in the frame 23 and does not therefore receive a latching action from the latch portions 28c, 28c of the stopper 28.

Further, the latch member 25 is rotated in the clockwise direction of Fig. 1 by a vertical component (a Z1 direction component) of the biasing force of the compressed biasing member S1. Accordingly, the latch portion 25e of the latch member 25 is set in an unlatched state removed from the bottom portion 23C of the frame 23 in the Z1 direction of the drawing.

In this state, the ejector 24 is moved in the Y2 direction of the drawing, and therefore the tip end portion of the switch plate 26 attached to the ejector 24 is positioned further toward a front side (the Y2 side) of the slit 44 in the switch 40 than the magnet 45 and Hall element 46 such that the magnetic field applied to the Hall element 46 by the magnet 45 is not blocked (see Fig. 3). Hence, the Hall element 46 generates electromotive force corresponding to the intensity (the magnetic flux density) of a unidirectional magnetic field received from the magnet and emits a current caused to flow by the electromotive force to the ECU in the form of a signal. The ECU then performs control on the basis of the signal output in the unlatched state to set a belt retracting force reduction mechanism in an inoperative state, set an in-vehicle belt warning lamp in an illuminated state, and adjust an airbag device to an appropriate operation state in accordance with other information (seating information, for example), for example.

### (2) Operation to switch to latched state

Next, the latched state in which the tongue plate 12 is attached to the buckle main body 20 will be described.
When the tip end portion of the tongue plate 12 is inserted into a gap between a lower side of the release button 31 on the buckle main body 20 side and the bottom portion 23C of the frame 23, the tip end portion of the tongue plate 12 contacts the pushed portion 24d of the ejector 24 and moves the ejector 24 in the Y1 direction of the drawing, i.e. the insertion direction. At this time, the shaft portion 27b of the cantilever 27 is moved in the insertion direction together with the ejector 24 against the biasing force of the biasing member S1, but since the latch portion 27a of the cantilever 27 pushes the lock bar 29 in the Y2 direction, the cantilever 27 is rotated in the counter-clockwise direction of Fig. 1 about the lock bar 29.

When the cantilever 27 rotates in the counter-clockwise direction of Fig. 1, the spring holding projecting portion 27d is moved in the Z1 direction of the drawing, whereby the biasing member S1 is compressed and bent to form a projection in the Z1 direction of the drawing, and as a result, the latch portion 27a of the cantilever 27 pushes the lock bar 29 down in the Z2 direction of the drawing while latched thereto. At this time, the lock bar 29 moves vertically along Y2 side edge portions of the guidance holes 23g, 23g in the drawing toward Z2 direction corner portions thereof and pushes the latch member 25 in the Z2 direction of the drawing, and as a result, the latch member 25 is rotated in the counter-clockwise direction about the support arms 25a, 25b. At this time, the latch portion 25e on the tip end of the latch member 25 enters the latch hole 12a provided in the tongue plate 12 and the latch hole 23c provided in the bottom portion 23C of the frame 23, and therefore the tongue plate 12 is latched by the latch member 25 (latched state, see Fig. 4).

When the tongue plate 12 is latched by the latch member 25, the insertion operation of the tongue plate 12 in the Y1 direction is halted. At this time, the two end portions of the lock bar 29 latched to the latch projecting portion 27c of the latch portion 27a move horizontally from the corner portions of the guidance holes 23g, 23g such that the ejector 24 is moved slightly in the Y2 direction of the drawing. When the lock bar 29 is moved in the Y2 direction at this time, the two ends thereof push the operation recess portions 31c, 31c of the release button 31 in the Y2 direction of the drawing, and as a result, the release button 31 is pushed slightly back. Accordingly, the stopper 28 is rotated in the counter-clockwise direction of Fig. 1 such that the latch portions 28c, 28c of the stopper 28 hold down and lock the lock bar 29.

In the latched state, the ejector 24 is moved in the Y1 direction of the drawing, and therefore the switch plate 26, which moves in conjunction with the ejector 24, is positioned further toward a back side (the Y1 side) of the slit 44 in the switch 40 than the magnet 45 and Hall element 46 such that the magnetic field applied to the Hall element 46 by the magnet 45 is blocked (see Fig. 3). Hence, the magnetic field received by the Hall element 46 from the magnet alters from the magnetic field of the unlatched state, and the Hall element 46 emits a current caused to flow by the resulting altered electromotive force to the ECU in the form of a signal. The ECU then performs control on the basis of the signal output in the latched state to set the belt retracting force reduction mechanism in an operative state, set the in-vehicle belt warning lamp in an extinguished state, and adjust the airbag device to an appropriate operation state, for example.

### (3) Operation to release latched state

When the release button 31 is pressed in the Y1 direction of the drawing, the release button 31 applies pressure to the stopper 28 in the Y1 direction of the drawing, whereby the stopper 28 is rotated in the counter-clockwise direction of Fig. 1. As a result, the latch applied to the lock bar 29 by the latch portions 28c, 28c of the stopper 28 is released. At the same time, the operation recess portions 31c, 31c of the release button 31 press the two ends of the lock bar 29 in the Y1 direction, and as a result, the lock bar 29 moves horizontally through the guidance holes 23g, 23g in the Y1 direction, thereby compressing the biasing member S1.

When the release button 31 is pressed in further such that the lock bar 29 passes the corner portions of the guidance holes 23g, 23g in the Y1 direction, the cantilever 27 is rotated quickly in the clockwise direction. As a result of this rotation operation, the lock bar 29 is lifted up by the latch projecting portion 27c of the cantilever 27 so as to move through the guidance holes 23g, 23g toward vertical direction upper end portions thereof. At the same time, the latch member 25 is rotated in the clockwise direction of Fig. 1 by the vertical component (Z1 direction component) of the biasing force of the compressed biasing member S1. As a result, the latch portion 25e of the latch member 25 is removed from the latch hole 12a in the tongue plate 12 and the latch hole 23c in the frame 23, thereby returning to its initial state (the unlatched state). At this time, the ejector 24 is pushed out vigorously in the Y2 direction of the drawing, and therefore the pushed portion 24d of the ejector 24 pushes out the tip end of the tongue plate 12 in the Y2 direction in a single burst. The switch plate 26 also moves in the Y2 direction, and therefore the unlatched state described above is reestablished (see Fig. 3).

Hence, with the seatbelt buckle with a switch 10 according to this embodiment, the switch 40 is sandwiched on its left and right sides by the side wall 23A of the frame 23 and the magnetic disturbance protecting plate 48, and the bottom portion of the switch 40 is covered by the magnetic disturbance protecting plate 48. The switch 40 is therefore magnetically shielded by the magnetic disturbance protecting plate 48 such that an external magnetic field from the magnet side is less likely to have an effect and only the magnetic field received from the magnet 45 is applied precisely.

Further, the switch plate 26 is covered by the magnetic disturbance protecting plate 48 even when the tongue plate 12 is attached to the buckle main body 20, and therefore magnetization of the switch plate 26 by an outside disturbance can be prevented and the Hall element 46 can perform highly precise detection.

Furthermore, the magnetic disturbance protecting plate 48 is attached to the lower cover 22 and disposed separately to the switch 40, and therefore improvements can be achieved in the ease of assembly of the buckle main body 20, the ease of attachment of the switch 40, and so on, and the freedom with which the wires 47a, 47b are drawn from the switch main body 41 can be increased. Moreover, the likelihood of contact between the magnetic disturbance protecting plate 48 and the switch plate 26 or the ejector 24 can be reduced. The weight of the switch 40 can also be reduced, and therefore the latch arms 42, 43 of the switch 40 latched to the frame 23 can be prevented from breaking when an external force such as an impact acts on the buckle main body 20.

Further, when the magnetic disturbance protecting plate 48 is attached to the switch 40, dust or the like may accumulate between the switch 40 and the magnetic disturbance protecting plate 48, leading to operation errors, but by providing the switch 40 and the magnetic disturbance protecting plate 48 separately and covering the switch plate 26, as in the present invention, accumulation of dust or the like can be prevented.

### Example

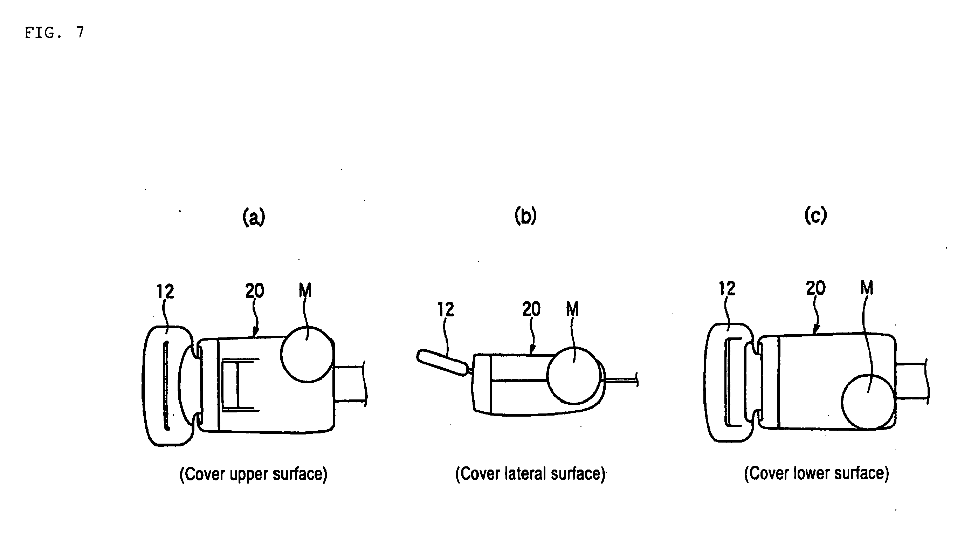

Next, a magnet approach resistance test performed on the seatbelt buckle with a switch 10 according to the present invention will be described.
As shown in Fig. 7, in this test, a magnet M was caused to approach an upper surface of the upper cover 21 (see Fig. 7A), a lateral surface of the buckle main body 20 (see Fig. 7B), and a lower surface of the lower cover 22 (see Fig. 7C) (test positions). Further, the following three types of magnet were used: (1) a φ 5 mm neodymium stationery magnet (approach distance 0 mm); (2) a φ 30 mm anisotropic ferrite (approach distance 0 mm); and (3) a φ 20 cm speaker magnet (approach distance 20 mm).

In the test, the magnet M was caused to approach the respective test positions, whereupon an output current from the Hall element 46 was measured in the unlatched state where the switch plate 26 is partially withdrawn from the switch main body 41 and thereby exposed from the magnetic disturbance protecting plate 48 (see Fig. 3) and the latched state where the tongue plate 12 is inserted (see Fig. 4). It was found as a result that the current from the Hall element 46 was detected accurately in both the unlatched state and the latched state. Hence, the current from the Hall element 46 was not disturbed by the approach of the magnet M, and it was therefore possible to confirm the effect of the magnetic disturbance protecting plate 48.

Note that the seatbelt buckle with a switch according to the present invention is not limited to the embodiment described above, and may be subjected to appropriate amendments, improvements, and so on.

For example, in this embodiment, the magnet 45 is disposed under the slit 44 in the switch main body 40, but the magnet 45 may be attached to the switch plate 26, and in this case also, the Hall element 46 can detect attachment/detachment of the tongue plate 12 by detecting variation in the magnetic flux density.

## Claims

1. A seatbelt buckle with a switch (10), comprising a tongue plate (12) provided on a seatbelt (11), a buckle main body (20) to which said tongue plate (12) is detachably attached, and a switch (40) capable of monitoring attachment/detachment of said tongue plate to (12) from said buckle main body (20), wherein
said buckle main body (20) has: a frame (23); an ejector (24) that is provided on said frame (23) to be capable of sliding in an insertion/removal direction of said tongue plate (12) and that pushes said tongue plate (12) out of said buckle main body (20) when a latch between said tongue plate and said buckle main body is released; and a latch member (25) capable of rotating so as to latch said tongue plate (12) when said tongue plate (12) is inserted into said buckle main body (20),
said switch (40) is attached to an outer side of a side wall of said frame (23),
the seatbelt buckle with a switch (10) being **characterized in that**
said switch (40) has: a magnetic detection portion capable of outputting a signal corresponding to a magnetic flux density; a magnet (45) that applies a magnetic field to said magnetic detection portion; and a switch plate (26) that is attached to said ejector (24) so as to move in conjunction therewith and that varies a magnetic flux density received by said magnetic detection portion from said magnet (45) in accordance with a position of said ejector (24),
a magnetic disturbance protecting plate (48) being further provided to cover at least said switch plate (26) in a state where said tongue plate (12) is attached to said buckle main body (20).

2. The seatbelt buckle with a switch (10) according to claim 1, **characterized in that** said magnetic disturbance protecting plate (48) is attached to a case housing said buckle main body (20) so as to cover said switch (40).

3. The seatbelt buckle with a switch (10) according to claim 1 or 2, **characterized in that** a tongue plate side end portion of said magnetic disturbance protecting plate (48) in said insertion/removal direction is positioned further toward a non-tongue plate side than a part joining said ejector (24) to said switch plate (26) when said latch is released.

## Patentansprüche

1. Ein Gurtschloss (10) mit einem Schalter, umfassend eine an einem Sicherheitsgurt (11) vorgesehene Gurtzungenplatte (12), ein Gurtschloss-Hauptteil (20), an welchem die Gurtzungenplatte (12) lösbar befestigt ist, und einen Schalter (40), welcher dazu eingerichtet ist, das Befestigen/Lösen der Gurtzungenplatte (12) an/von dem Gurtschloss-Hauptteil (20) zu überwachen, wobei
das Gurtschloss-Hauptteil (20) aufweist: einen Rahmen (23); eine Auswurfvorrichtung (24), welche an dem Rahmen (23) vorgesehen ist, um in eine Einführ-/Entnahmerichtung der Gurtzungenplatte (12) verschiebbar zu sein, und die Gurtzungenplatte (12) aus dem Gurtschloss-Hauptteil (20) herausdrückt, wenn eine Verriegelung zwischen der Gurtzungenplatte und dem Gurtschloss-Hauptteil gelöst wird; und ein Verriegelungselement (25), welches schwenkbar ist, um die Gurtzungenplatte (12) zu verriegeln, wenn die Gurtzungenplatte (12) in das Gurtschloss-Hauptteil (20) eingeführt wird,
wobei der Schalter (40) an einer Außenseite einer Seitenwand des Rahmens (23) befestigt ist,
wobei das Gurtschloss (10) mit einem Schalter **dadurch gekennzeichnet ist, dass**
der Schalter (40) aufweist: einen magnetischen Erkennungsabschnitt, welcher dazu eingerichtet ist, ein einer magnetischen Flussdichte entsprechendes Signal auszugeben; ein Magnet (45), welcher ein Magnetfeld an den magnetischen Erkennungsabschnitt anlegt; und eine Schaltplatte (26), welche an der Auswurfvorrichtung (24) befestigt ist, um sich in Verbindung mit dieser zu bewegen, und welche eine durch den magnetischen Erkennungsabschnitt von dem Magnet (45) erhaltene magnetische Flussdichte entsprechend einer Stellung der Auswurfvorrichtung (24) verändert,
wobei zusätzlich eine Platte (48) zum Schutz vor magnetischen Störungen vorgesehen ist, um zumindest die Schaltplatte (26) in einer Stellung abzudecken, in der die Gurtzungenplatte (12) an dem Gurtschloss-Hauptteil (20) befestigt ist.

2. Das Gurtschloss (10) mit einem Schalter nach Anspruch 1, **dadurch gekennzeichnet, dass** die Platte (48) zum Schutz vor magnetischen Störungen an einem das Gurtschloss-Hauptteil (20) aufnehmenden Gehäuse befestigt ist, um den Schalter (40) abzudecken.

3. Das Gurtschloss (10) mit einem Schalter nach Anspruch 1 oder 2, **dadurch gekennzeichnet, dass** ein gurtzungenplattenseitiger Endteil der Platte (48) zum Schutz vor magnetischen Störungen in der Einführ-/Entnahmerichtung näher einer Nicht-Gurtzungenplattenseite angeordnet ist, als ein Teil, welches die Auswurfvorrichtung (24) mit der Schaltplatte (26) verbindet, wenn die Verriegelung gelöst ist.

## Revendications

1. Une boucle de ceinture de sécurité avec interrupteur (10), comprenant une plaque à languette (12) prévue sur une ceinture de sécurité (11), un corps principal de boucle (20) sur lequel ladite plaque à languette (12) est fixée de manière amovible, et un interrupteur (40) apte à surveiller la fixation/libération de ladite plaque à languette (12) vers/depuis ledit corps principal de boucle (20),
dans laquelle
ledit corps principal de boucle (20) comporte : un châssis (23) ; un éjecteur (24) qui est prévu sur ledit châssis (23) pour être apte à glisser dans une direction d'insertion/de retrait de ladite plaque à languette (12) et qui pousse ladite plaque à languette (12) hors dudit corps principal de boucle (20) quand un loquet entre ladite plaque à languette et ledit corps principal de boucle est libéré ; et un élément de loquet (25) apte à tourner de manière à fermer au loquet ladite plaque à languette (12) quand ladite plaque à languette (12) est insérée dans ledit corps principal de boucle (20),
ledit interrupteur (40) est fixé à une face extérieure d'une paroi latérale dudit châssis (23), la boucle de ceinture de sécurité avec interrupteur (10) étant **caractérisée par le fait que** ledit interrupteur (40) comprend : une portion de détection magnétique apte à émettre un signal correspondant à une densité du flux magnétique ; un aimant (45) qui applique un champ magnétique à la portion de détection magnétique ; et une plaque d'interrupteur (26) qui est fixée sur ledit éjecteur (24) de manière à se déplacer conjointement avec ce dernier et qui fait varier un flux magnétique reçu par ladite portion de détection magnétique provenant dudit aimant (45) selon une position dudit éjecteur (24), une plaque de protection contre les perturbations magnétiques (48) étant en outre prévue pour recouvrir au moins ladite plaque d'interrupteur (26) dans un état où ladite plaque à languette (12) est fixée sur ledit corps principal de boucle (20).

2. La boucle de ceinture de sécurité avec interrupteur (10) selon la revendication 1, **caractérisée par le fait que** ladite plaque de protection contre les perturbations magnétiques (48) est fixée à un boîtier logeant ledit corps principal de boucle (20) de manière à recouvrir ledit interrupteur (40).

3. La boucle de ceinture de sécurité avec interrupteur (10) selon la revendication 1 ou 2, **caractérisée par le fait qu'**une portion d'extrémité de ladite plaque de protection contre les perturbations magnétiques (48) à côté de la plaque à languette dans ladite direction d'insertion/de retrait est positionnée plus loin vers un côté pas de plaque à languette qu'une partie reliant ledit éjecteur (24) à ladite plaque d'interrupteur (26) quand ledit loquet est libéré.
